# EUROPÄISCHE PATENTSCHRIFT

(11) **EP 0 528 310 B1**
(45) Veröffentlichungstag und Bekanntmachung des Hinweises auf die Patenterteilung: **10.04.1996**
(21) Anmeldenummer: 92113558.8
(22) Anmeldetag: 08.08.1992
(51) Int. Cl.: A01D 41/12, B65G 65/46

(54) **Fördersystem**
Conveying system
Système transporteur

(30) Priorität: 16.08.1991 DE 4127117
(43) Veröffentlichungstag der Anmeldung: 24.02.1993
(73) Patentinhaber: DEERE & COMPANY, Moline, Illinois 61265 (US)
(72) Erfinder: Schuhmacher, Ernst, W-6650 Homburg-Einöd (DE)
(74) Vertreter: Feldmann, Bernhard

(56) Entgegenhaltungen:
- EP-A- 0 049 315
- EP-A- 0 143 108
- DE-A- 2 704 393
- US-A- 3 265 226
- US-A- 4 386 695

## Beschreibung

Die Erfindung betrifft ein Fördersystem für rieselfähiges Schüttgut, insbesondere für den Korntank einer Erntemaschine, mit wenigstens einer Fördervorrichtung in einem Fördergehäuse, die an mehreren in Förderrichtung aufeinanderfolgenden Stellen beschickt wird und in Förderrichtung gesehen mehrere Abschnitte unterschiedlicher Förderkapazität enthält, die stromabwärts größer ist als stromaufwärts.

Zum Entleeren großer Behälter ist es oft erforderlich, ein gesamtes Fördersystem zu verwenden, das aus mehreren aktiven und/oder passiven Förderern besteht. Herkömmlich werden mehrere seitliche Förderer vorgesehen, die einen Hauptförderer beschicken.

So zeigt die EP-B1-0 143 108 ein Fördersystem für den Korntank eines Mähdreschers, das eine Austragsschnecke und zwei dazu quer verlaufende Füllschnecken enthält. Diese Schnecken werden gemeinsam angetrieben und fördern das in dem Korntank befindliche Schüttgut einem Ausgang zu.

Bei derartigen Fördersystemen tritt das Problem auf, daß die stromabwärts gelegene Füllschnecke bei einem Fördervorgang stets angetrieben wird, aber bei einem hohen Füllgrad der Austragsschnecke in diese nicht fördern kann und somit das von ihr geförderte Schüttgut zur Seite oder nach oben bewegen muß. Dadurch entsteht ein hoher Verschleiß an dieser Füllschnecke und ein überhöhter Energiebedarf. Handelt es sich bei dem Schüttgut zudem um feuchtes, leicht backendes Gut, kann es aufgrund der dadurch entstehenden Verdichtung zu weiteren Förderproblemen kommen.

Die DE-A-27 04 393 offenbart eine an der Unterseite eines mit schwer fließendem und pastösem Gut wie Müll, Schlämme, Filterpreßkuchen, Preßlinge, Knochen, Holzspäne, Hackschnitzel oder dergl. gefüllten Silos in einer horizontalen Ebene umlaufende Schnecke mit unterschiedlichem Kerndurchmesser. Der kontinuierlich oder diskontinuierlich zum Abgabepunkt der Schnecke abnehmende Kerndurchmesser ist so gewählt, um ein ungleichmäßiges Absinken des im Silo enthaltenen Guts zu vermeiden, was ansonsten zu einer ungleichmäßigen Behandlung des Guts nach der Umlaufgeschwindigkeit der Schnecke um ihre vertikale Achse und nach der Sinkgeschwindigkeit des Siloguts. Somit wird diese Schnecke als Umlaufschneckenkratzer benutzt, der an einer Gutoberfläche in einem Silo geführt wird, um einen Teil des in dem Silo gelagerten Guts abzutragen und somit eine konstante Entnahme des Guts zur Wahrung der Guthomogenität zu gewährleisten. Diese Schnecke bewegt sich in schwer fließendem Gut, so daß sie nicht einem mehr oder weniger hohen Füllgrad unterliegt, zumal der Schüttgrad anders als bei leicht fließendem Schüttgut nicht von dem Gut, sondern von der Abtragkapazität des mit Meißeln bestückten Schneckenkratzers her bestimmt wird; eine Gutzufuhr an definierten Stellen erfolgt nicht.

Aus der US-A-3 152 702 ist ein sattelartiger Korntank eines Mähdreschers bekannt, in dessen Bodenbereich sich eine Austragsschnecke mit einem Bereich größeren und einem Bereich kleineren Außendurchmessers erstreckt. Der Bereich größeren Außendurchmessers befindet sich im Mündungsbereich eines der Satteltanks. Zur Vermeidung einer ungleichmäßigen Förderung in einem Korntank ist als Lösung eine Förderschnecke mit unterschiedlich hohen Schneckenwendeln vorgesehen. Daneben werden für den Übergang zwischen der Bodenschnecke und dem Senkrechtförderer und zwischen diesem und der Entleerrohrschnecke als Maßnahmen für einen Förderkapazitätssprung eine Erhöhung der Drehgeschwindigkeit, eine Vergrößerung der Schneckengröße oder eine Vergrößerung der Steigung der Schneckenwendel vorgeschlagen.

Die der Erfindung zugrunde liegende Aufgabe wird darin gesehen, ein Fördersystem für rieselfähiges Schüttgut mit wenigstens einer Fördervorrichtung in einem Fördergehäuse, die an mehreren in Förderrichtung aufeinanderfolgenden Stellen beschickt wird, vorzuschlagen, bei dem eine Überfütterung der Fördervorrichtung im stromabwärts gelegenen Bereich nicht eintritt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann das Fördervolumen der Fördervorrichtung in dem Abschnitt zwischen einer stromaufwärts gelegenen Zuführstelle und einer stromabwärts gelegenen Zuführstelle geringer sein als in dem stromabwärts gelegenen Abschnitt, so daß das Differenzvolumen von einem stromabwärts gelegenen Förderer aufgefüllt werden kann. Dadurch, daß das Außenmaß der Fördervorrichtung gleichbleibend ist, kann die Fördervorrichtung in einem auf der ganzen Länge gleichbleibenden Gehäuse fördern, so daß dieses kostengünstig herstellbar ist und keine Stufen oder dergleichen aufweist. Die Verwendung eines Trägers mit unterschiedlichem Durchmesser bzw. Außenumfang stellt eine einfache Art eines Förderkapazitätensprungs dar, die fertigungstechnisch leicht handhabbar ist. Allerdings kann durch die im folgenden genannten Maßnahmen der Förderkapazitätssprung verstärkt, variiert oder angepaßt werden.

Ein derartiges Fördersystem kann außer in dem Korntank eines Mähdreschers auch in einem Silo, einem Bunker oder in sonstigen Anlagen Verwendung finden, in denen Schüttgut befördert wird. Die Zuführung des Schüttguts in die Fördervorrichtung kann mittels aktiver und/oder passiver Förderer erfolgen. Unter einem aktiven Förderer könnte eine Förderschnecke, ein Kratzbodenförderer, ein Elevatorförderer, eine Schüttrinne oder dergleichen verstanden werden. Bei den passiven Förderern könnte es sich um eine Rutsche, einen Trichter oder dergleichen handeln.

Je nachdem, an wievielen Stellen eine Zufuhr von Schüttgut erfolgt, können zwei, drei oder noch mehr Abschnitte unterschiedlicher Förderleistung in der Fördervorrichtung vorgesehen werden.

Der Unterschied in der Förderleistung kann unter anderem dadurch hervorgerufen werden, daß mehrere hintereinander geschaltete Förderer vorgesehen sind, von denen der eine mehr fördert als der andere und bei denen der jeweils nachfolgende das Fördergut übernimmt. Bei diesen Förderern kann es sich um Schnekkenförderer, Kratzbodenförderer oder Elevatorförderer handeln, die in einem gemeinsamen Gehäuse untergebracht sind.

Eine unterschiedliche Förderkapazität kann z. B. dadurch leicht erzielt werden, daß die Förderer mit unterschiedlicher Fördergeschwindigkeit arbeiten, was mittels eines Getriebes durchführbar ist. Bei dieser Ausführungsform können die jeweiligen Förderer auch mit einer veränderbaren Geschwindigkeit betrieben werden, die eine weitere Anpassung an den Entladevorgang ermöglicht.

Eine unterschiedliche Förderleistung kann auch durch die Benutzung von Förderern erzielt werden, deren Förderelemente unterschiedlich groß sind, wobei die Außenabmessung wiederum gleich bleibt. Eine Veränderung der Förderelemente in ihrer Größe bei gleichbleibenden Außenabmessungen kann dadurch bewirkt werden, daß ein Träger, auf den die Förderelemente aufgesetzt sind, in seinen Außenabmessungen verändert wird.

Eine stufenlose, problemlose Gutübergabe von einem Förderer zu einem nachfolgenden Förderer ist dann gewährleistet, wenn diese auf einer gemeinsamen Drehachse lagern. Dabei können die beiden Förderer von unterschiedlichen Seiten oder von einer Seite aus angetrieben werden. Im letztgenannten Fall könnte sich die Antriebswelle eines als Schneckenförderer ausgebildeten Förderers durch das Antriebsrohr eines anderen Schneckenförderers erstrecken. In besonders vorteilhafter Weise kann die Antriebsgeschwindigkeit der beiden Förderer zueinander veränderlich und steuerbar ausgebildet werden, so daß auf Besonderheiten des Gutverhaltens während des Fördervorgangs eingegangen werden kann. Setzt sich die Fördervorrichtung aus mehreren zueinander parallel geschalteten Förderern mit unterschiedlicher Förderlänge oder Förderkapazität zusammen, von denen einer nur auf einem Teil der gesamten Förderlänge wirkt, z. B. zwei parallelachsig verlaufende Schneckenförderer mit unterschiedlich langem Wendelabschnitt, kann die Förderleistung ab einer bestimmten Stelle durch die Anordnung der Wendel oder dergleichen erhöht werden.

Förderleistungen, die ab den jeweiligen Zuführstellen sich verändern, können zusätzlich durch die Verwendung eines einzigen Förderers erreicht werden, der zwar gleiche Außenabmessungen aufweist, aber auf seiner gesamten Förderlänge unterschiedlich ausgebildet ist, was bei einem Schneckenförderer insbesondere durch eine unterschiedliche Gestaltung der Schneckenwendel oder der Schneckensteigung geschehen kann. Bei einem Kratzboden- oder Elevatorförderer könnte hingegen die Neigung der Förderelemente verändert werden.

Werden aktive Förderer gleicher Förderleistung, z. B. als Schneckenförderer ausgebildete, benutzt, um das Fördergut der Fördervorrichtung zuzutragen, kann die Förderleistung in den jeweiligen Abschnitten nach der Anzahl der zuführenden Förderer berechnet werden.

In der Zeichnung ist ein nachfolgend näher beschriebenes Ausführungsbeispiel der Erfindung dargestellt. Es zeigt:
- Fig. 1: eine Erntemaschine in Seitenansicht mit einem erfindungsgemäßen Fördersystem und
- Fig. 2: das Fördersystem in Draufsicht.

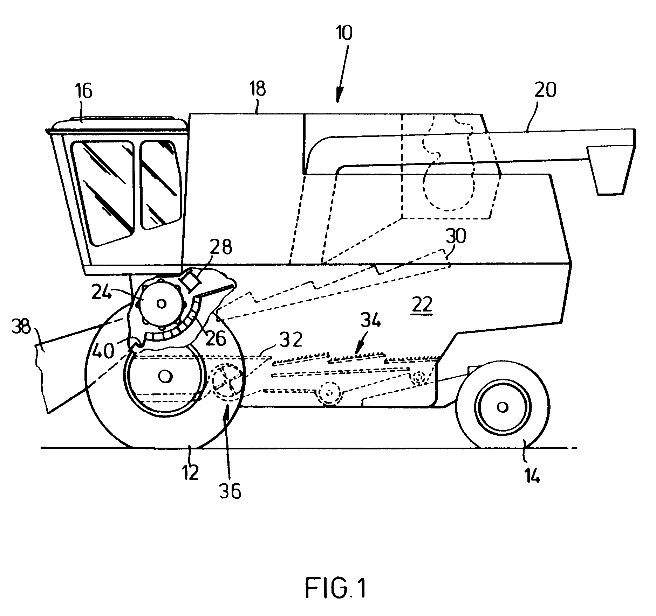

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Zur Aufnahme des Guts vom Boden ist eine nicht gezeigte Erntegutbergungsvorrichtung vorgesehen, die das Gut über einen Schrägförderer 38 und eine Steinfangmulde 40 der Dreschtrommel 24 zuführt.

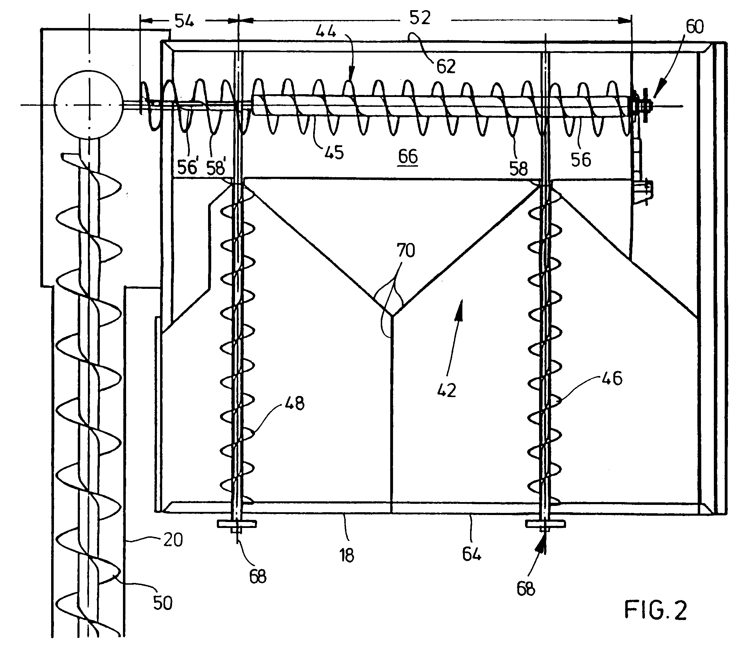

Im folgenden wird auf die Ausführung in Figur 2 verwiesen, die ein erfindungsgemäßes Fördersystem 42 näher zeigt.

Das erfindungsgemäße Fördersystem 42, das sich bei diesem Ausführungsbeispiel innerhalb des Korntanks 18 befindet, enthält in diesem Fall eine Fördervorrichtung 44 und zwei Zuführförderer 46, 48.

Die Fördervorrichtung 44 wird bei diesem Ausführungsbeispiel von einem als Schneckenförderer ausgebildeten Förderer 45 gebildet, der sich über die gesamte Breite des Korntanks 18 und nahe dessen Boden erstreckt und abgabeseitig zu dem Entleerrohr 20 führt, in dem ein weiterer Schneckenförderer 50 zur Gutübernahme vorgesehen ist. Der Förderer 45 ist einteilig ausgebildet und weist einen ersten, stromaufwärts gelegenen Abschnitt 52 und einen zweiten, stromabwärts gelegenen Abschnitt 54 auf. In jedem Abschnitt 52, 54 ist ein Träger 56 bzw, 56' und ein darauf befestigtes Förderelement 58 bzw. 58' vorgesehen, die jeweils ineinander übergehen bzw. starr miteinander verbunden sind.

Der bzw. die Träger 56, 56' sind als Rohr ausgebildet und erstrecken sich koaxial und rund-zylindrisch zu einer gemeinsamen Drehachse. Der Durchmesser des Trägers 56 in dem ersten Abschnitt 52 ist wesentlich größer als der des Trägers 56' in dem zweiten Abschnitt 54.

Die Förderelemente 58, 58' sind als Schneckenwendel ausgebildet, auf die Träger 56, 56' aufgeschweißt und weisen über die gesamte Länge der Fördervorrichtung 44 den gleichen Außendurchmesser auf. Demnach nimmt der Förderer 45 zu den ihn umgebenden Teilen des Korntanks 18, d. h. dessen Boden, dessen Vorderwand und einer nicht gezeigten Abdeckung auf seiner gesamten Länge den gleichen Abstand ein; diese genannten Teile bilden somit sein Fördergehäuse 59. Während die Steigung beider Förderelemente 58, 58' gleich ist, ist die radiale Abmessung des Förderelements 58' in dem zweiten Abschnitt 54 größer als die des Förderelements 58 in dem ersten Abschnitt 52. Dieser Unterschied beruht auf der Differenz zwischen dem gleichen Außendurchmesser zu dem unterschiedlichen Innendurchmesser der Förderelemente 58, 58', der sich nach dem Durchmesser des Trägers 56, 56' in dem jeweiligen Abschnitt 52, 54 richtet. Demnach kann der Förderer 45 in seinem zweiten Abschnitt 54 ein größeres Volumen aufnehmen als in seinem ersten Abschnitt 52.

Der Antrieb des Förderers 45 erfolgt über ein Kettengetriebe 60, das infolge seiner herkömmlichen Ausbildung keiner näheren Beschreibung bedarf und nur schematisch angedeutet ist.

Aufgrund der starren Verbindung der beiden Abschnitte 52, 54 des Förderers 45 wird dieser mit einer einheitlichen Geschwindigkeit angetrieben, so daß sich aufgrund der unterschiedlichen Größe der Förderelemente 58, 58' in beiden Abschnitten 52, 54 unterschiedlich große Förderkapazitäten ergeben.

Der Übergang zwischen dem ersten und dem zweiten Abschnitt 52 und 54 erfolgt unmittelbar vor der Stelle, an der der zweite, d. h. der dem Schneckenförderer 50 zugelegene Zuführförderer 48 auf den Förderer 45 trifft. Diese Zuführstelle liegt stromabwärts der Zuführstelle des ersten Zuführförderers 46.

Beide Zuführförderer 46, 48 sind identisch und als Schneckenförderer ausgebildet, die sich zwischen einer rückwärtigen und einer vorderen Wand 62 und 64 des Korntanks 18 erstrecken. Die Zuführförderer 46, 48 sind nur bis zu einer den Förderer 45 teilweise umgebenden Bodenmulde 66 seines Fördergehäuses 59 mit Schneckenwendeln versehen, während die Schneckenwelle zu dem Förderer 45 im Bereich der Bodenmulde 66 einen vertikalen Versatz aufweist, so daß sich die Schneckenwelle bis zu der vorderen Wand 62 erstrecken kann und in dieser gelagert ist.

Der Antrieb der Zuführförderer 46, 48 erfolgt ebenfalls über Getriebe 68, die mit dem Kettengetriebe 60 des Förderers 45 in Verbindung stehen, so daß stets eine Abhängigkeit der Antriebsgeschwindigkeiten und somit der Förderkapazitäten des Förderers 45 und der Zuführförderer 46, 48 gegeben ist, die einen reibungslosen Gutweitertransport bewirkt.

Die Steigung der Förderelemente 58, 58' des Förderers 45 bzw. der Schneckenwendel der Zuführförderer 46, 48 ist so gewählt, daß eine Gutförderung von der rückwärtigen Wand 64 zu der vorderen Wand 62 und entlang der vorderen Wand zu dem Entleerrohr 20 hin erfolgt.

Es ist nach alledem ersichtlich, daß bei gefülltem Korntank 18 und angetriebenem Fördersystem 42 der stromaufwärts gelegene erste Zuführförderer 46 Gut zu dem Förderer 45 an dessen stromaufwärts liegendem Endbereich liefert und den ihn einschließenden Förderraum bis maximal zu 100 % füllt. Dieses Gut wird infolge der Drehung des Förderers 45 zu dem Entleerrohr 20 befördert. An der Zuführstelle des zweiten, stromabwärts gelegenen Zuführförderers 48 vergrößert sich sprunghaft die Förderkapazität des Förderers 45, da der Durchmesser des Trägers 56' an dieser Stelle wesentlich kleiner ist und sich dadurch zusätzliches Fördervolumen ergibt. Dieses zusätzliche Fördervolumen ist geeignet, das von dem zweiten Zuführförderer 48 herangeführte Gut aufzunehmen, so daß an dem Treffpunkt des Förderers 45 mit dem zweiten Zuführförderer 46 kein Materialstau entsteht.

Der Boden des Korntanks 18 kann in bekannter Weise mit Mulden versehen sein, in denen die Zuführförderer 46, 48 untergebracht sind und deren Wände auf Scheitellinien 70 aufeinander treffen.

In Ausführungsbeispielen, in denen drei, vier oder mehr Zuführförderer 46, 48, vorgesehen sind, kann der Durchmesser des Trägers 56, 56' des Förderers zweifach, dreifach oder mehrfach abgestuft sein, um für das jeweils hinzukommende Gut zusätzliche Förderkapazität zu schaffen.

## Patentansprüche

1. Fördersystem (42) für rieselfähiges Schüttgut, insbesondere für den Korntank (18) einer Erntemaschine (10), mit wenigstens einer Fördervorrichtung (44) in einem Fördergehäuse (59), die an mehreren in Förderrichtung aufeinanderfolgenden Stellen beschickt wird und in Förderrichtung gesehen mehrere Abschnitte (52, 54) unterschiedlicher Förderkapazität enthält, die stromabwärts größer ist als stromaufwärts dadurch gekennzeichnet, daß die Fördervorrichtung (44) quer zur Förderrichtung von gleichbleibendem Außenmaß ist, wobei der Durchmesser eines Förderelemente (58, 58') tragenden Trägers (56, 56') in den jeweiligen Abschnitten (52, 54) unterschiedlich ist.

2. Fördersystem nach Anspruch 1, dadurch gekennzeichnet, daß die Fördervorrichtung (44) mehrere hintereinander - geschaltete Förderer aufweist.

3. Fördersystem nach Anspruch 2, dadurch gekennzeichnet, daß die Förderer mit unterschiedlicher Fördergeschwindigkeit arbeiten.

4. Fördersystem nach Anspruch 2, dadurch gekennzeichnet, daß die Förderer mit unterschiedlich großen Förderelementen versehen sind.

5. Fördersystem nach Anspruch 2 oder 3, dadurch gekennzeichnet, daß die Förderer als Schneckenförderer ausgebildet sind, die koaxial zueinander verlaufen und zueinander tangential relativ beweglich sind.

6. Fördersystem nach Anspruch 1, dadurch gekennzeichnet, daß die Fördervorrichtung (44) mehrere zueinander parallel geschaltete Förderer mit unterschiedlicher Förderlänge oder Förderkapazität aufweist.

7. Fördersystem nach Anspruch 1, dadurch gekennzeichnet, daß die Fördervorrichtung (44) einen einzigen Förderer (45) enthält, der in Förderrichtung gesehen unterschiedlich ausgebildet ist.

8. Fördersystem nach Anspruch 7, dadurch gekennzeichnet, daß der Förderer (45) als Schneckenförderer ausgebildet ist.

9. Fördersystem nach Anspruch 8, dadurch gekennzeichnet, daß die Steigung der als Schneckenwendel ausgebildeten Förderelemente (58, 58') in den jeweiligen Abschnitten (52, 54) unterschiedlich ist.

10. Fördersystem nach Anspruch 8, dadurch gekennzeichnet, daß die Dicke der als Schneckenwendel ausgebildeten Förderelemente (58, 58') in den jeweiligen Abschnitten (52, 54) unterschiedlich ist.

11. Fördersystem nach einem oder mehreren der vorherigen Ansprüche, dadurch gekennzeichnet, daß bei zwei Zuführstellen zu der Fördervorrichtung (44) das Fördervolumen in dem stromabwärts gelegenen Abschnitt (54) doppelt so groß ist, wie im dem stromaufwärts gelegenen Abschnitt (52).

12. Fördersystem nach einem oder mehreren der vorherigen Ansprüche, dadurch gekennzeichnet, daß die Zufuhr des Guts zu der Fördervorrichtung (44) mittels als Schneckenförderer ausgebildeten Zuführförderern (46, 48) erfolgt.

## Claims

1. Conveying system (42) for pourable bulk material, in particular for the grain tank (18) of a harvesting machine (10), with at least one conveying device (44) in a conveying housing (59), which is supplied at several points succeeding each other in the direction of conveying and, as seen in the direction of conveying, contains several sections (52, 54) of different conveying capacity, which is greater downstream than upstream, characterised in that the conveying device (44) has constant external dimensions transversely to the direction of conveying, wherein the diameter of a support (56, 56') carrying conveying elements (58, 58') is different in the respective sections (52, 54).

2. Conveying system according to claim 1, characterised in that the conveying device (44) comprises several conveyors connected one behind the other.

3. Conveying system according to claim 2, characterised in that the conveyors operate at different speeds of conveying.

4. Conveying system according to claim 2, characterised in that the conveyors are provided with conveying elements of different size.

5. Conveying system according to claim 2 or 3, characterised in that the conveyors are constructed as worm conveyors which extend coaxially with each other and are relatively movable tangentially to each other.

6. Conveying system according to claim 1, characterised in that the conveying device (44) comprises several conveyors connected in parallel with each other, with different conveying lengths or conveying capacities.

7. Conveying system according to claim 1, characterised in that the conveying device (44) contains a single conveyor (45) which is constructed differently as seen in the direction of conveying.

8. Conveying system according to claim 7, characterised in that the conveyor (45) is constructed as a worm conveyor.

9. Conveying system according to claim 8, characterised in that the pitch of the conveying elements (58, 58') constructed as worm helixes is different in the respective sections (52, 54).

10. Conveying system according to claim 8, characterised in that the thickness of the conveying elements (58, 58') constructed as worm helixes is different in the respective sections (52, 54).

11. Conveying system according to one or more of the preceding claims, characterised in that, in case of two supply points to the conveying device (44), the conveying volume in the downstream section (54) is twice as great as in the upstream section (52).

12. Conveying system according to one or more of the preceding claims, characterised in that supply of the material to the conveying device (44) takes place by means of supply conveyors (46, 48) constructed as worm conveyors.

## Revendications

1. Système de convoyage (42) pour un matériau en vrac apte à s'écouler, notamment pour la cuve à grains (18) d'une moissonneuse (10), comportant au moins un dispositif de convoyage (44) situé dans un carter de convoyage (59) et qui est chargé en plusieurs emplacements se succédant dans la direction de convoyage, et comporte, lorsqu'on regarde dans la direction de convoyage, plusieurs sections (52,54) ayant des capacités différentes de convoyage, ces capacités étant plus importantes en aval qu'en amont, caractérisé en ce que le dispositif de convoyage (44) possède des cotes extérieures constantes transversalement par rapport à la direction de convoyage, le diamètre d'un support (56,56') portant des éléments de convoyage (58,58') étant différent dans les sections respectives (52,54).

2. Système de convoyage selon la revendication 1, caractérisé en ce que le dispositif de convoyage (44) comporte plusieurs convoyeurs disposés les uns derrière les autres.

3. Système de convoyage selon la revendication 2, caractérisé en ce que les convoyeurs travaillent avec des vitesses d'entraînement différentes.

4. Système de convoyage selon la revendication 2, caractérisé en ce que les convoyeurs comportent des éléments de convoyage ayant des tailles différentes.

5. Système de convoyage selon la revendication 2 ou 3, caractérisé en ce que les convoyeurs sont agencés sous la forme de convoyeurs à vis, qui sont coaxiaux et sont déplaçables tangentiellement les uns par rapport aux autres.

6. Système de convoyage selon la revendication 1, caractérisé en ce que le dispositif de convoyage (44) comporte plusieurs convoyeurs montés en parallèle et possédant une longueur de convoyage variable ou une capacité de convoyage variable.

7. Système de convoyage selon la revendication 1, caractérisé en ce que le dispositif de convoyage (44) contient un seul convoyeur (45), qui est agencé différemment lorsqu'on regarde dans la direction de convoyage.

8. Système de convoyage selon la revendication 7, caractérisé en ce que le convoyeur (45) est agencé sous la forme d'un convoyeur à vis.

9. Système de convoyage selon la revendication 8, caractérisé en ce que le pas des éléments de convoyage (58, 58') agencés sous la forme de vis hélicoïdales est différent dans les sections respectives (52,54).

10. Système de convoyage selon la revendication 8, caractérisé en ce que l'épaisseur des éléments de convoyage (58,58') agencés sous la forme de vis hélicoïdales est différente dans les sections respectives (52,54).

11. Système de convoyage selon une ou plusieurs des revendications précédentes, caractérisé en ce que dans deux postes d'alimentation aboutissant au dispositif de convoyage (44), le volume convoyé dans la section (54) située en aval est égal au double du volume convoyé dans la section (52) située en amont.

12. Système de convoyage selon une ou plusieurs des revendications précédentes, caractérisé en ce que l'envoi de la manière au dispositif de convoyage (44) s'effectue à l'aide de convoyeurs d'amenée (46,48), qui sont agencés sous la forme de convoyeurs à vis.
